(19) Europäisches Patentamt
European Patent Office
Office européen des brevets

(11) **EP 2 036 673 B1**

(12) **EUROPÄISCHE PATENTSCHRIFT**

(45) Veröffentlichungstag und Bekanntmachung des Hinweises auf die Patenterteilung:
**18.12.2013 Patentblatt 2013/51**

(51) Int Cl.:
***B24B 53/085*** *(2006.01)* ***B23F 23/12*** *(2006.01)*

(21) Anmeldenummer: 08105333.2

(22) Anmeldetag: **12.09.2008**

(54) **Verfahren zum Abrichten eines für die Feinbearbeitung der Zähne eines Zahnrades bestimmten Werkzeugs**

Method for dressing a tool used for fine machining of gears

Procédé pour dressage d'un outil spécifique au traitement précis des dents d'une roue dentée

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **12.09.2007 DE 102007043404**
**12.09.2007 DE 102007043402**
**12.09.2007 DE 102007043405**
**12.09.2007 DE 102007043384**

(43) Veröffentlichungstag der Anmeldung:
**18.03.2009 Patentblatt 2009/12**

(73) Patentinhaber: **Präwema Antriebstechnik GmbH**
**37269 Eschwege/Werra (DE)**

(72) Erfinder:
• **Preis, Josef**
**35287 Amönburg-Mardorf (DE)**
• **Schieke, Jörg**
**99092 Erfurt-Marbach (DE)**

(74) Vertreter: **Cohausz & Florack**
**Patent- und Rechtsanwälte**
**Partnerschaftsgesellschaft**
**Bleichstraße 14**
**40211 Düsseldorf (DE)**

(56) Entgegenhaltungen:
EP-A2- 0 993 908    DE-C1- 2 857 823
DE-U1- 9 300 936    US-B1- 6 190 241

EP 2 036 673 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zum Abrichten eines für die Feinbearbeitung der Zähne eines Zahnrades bestimmten, eine mit dem zu bearbeitenden Zahnrad in Eingriff kommende Verzahnung aufweisenden Werkzeugs mittels eines Abrichtrades.

Zum Feinbearbeiten von Zahnrädern werden üblicherweise keramisch- oder harzgebundene Werkzeuge mit einer Verzahnung verwendet, deren Gestalt der Form des zu bearbeitenden Zahnrades entspricht. Zum nach einer gewissen Einsatzdauer erforderlichen Abrichten der Werkzeuge werden üblicherweise Abrichtwerkzeuge eingesetzt, in die das Profil des abzurichtenden Werkzeugs sowie die Formelemente eingearbeitet sind, um die gegebenenfalls erforderlichen Geometrieänderungen am abzurichtenden Werkzeug zu erzeugen. Im Zuge des Abrichtvorgangs wird dann das Profil bzw. die Geometrie des Abrichtwerkzeugs auf das abzurichtende Werkzeug übertragen.

Ein Beispiel für diese Vorgehensweise ist aus der JP 09-057624 A bekannt. Um einen optimalen Werkstoffabtrag während des Abrichtvorgangs bei gleichzeitig optimaler Übertragung der Form der Zähne des Abrichtrades auf das abzurichtende, innenverzahnte und ringförmig ausgebildete Honwerkzeug sicherzustellen, werden bei diesem Stand der Technik das Abrichtrad und das Werkzeug vor Beginn des Abrichtprozesses in bestimmter Weise positioniert und anschließend über jeweils getrennte, jedoch synchron laufende Antriebe solange angetrieben, bis das gewünschte Abrichtergebnis erreicht wird. Das zu diesem Zweck gemäß dem in der JP 09-057624 A beschriebenen Stand der Technik eingesetzte Abrichtrad ist schmaler als das abzurichtende Honwerkzeug. Jedoch ist seine Breite unter Berücksichtigung des Achskreuzwinkels, unter dem die Drehachse des abzurichtenden Werkzeugs und des Abrichtrades zueinander ausgerichtet sind, so bemessen, dass die Zähne des abzurichtenden Werkzeugs bei einem Umlauf jeweils über die gesamte Breite ihrer Zahnflanken von den Zähnen des Abrichtrades überstrichen werden.

Damit die Schneidwirkung des Abrichtwerkzeugs verstärkt wird, wird das Abrichtwerkzeug bei Vorrichtungen der voranstehend erläuterten Art neben der zwecks Einformung der jeweils gewünschten Zahnform erforderlichen Zustellbewegung (X-Richtung) üblicherweise auch noch oszillierend in Richtung seiner Drehachse bewegt (Z-Richtung). Da die Breite des Abrichtrades dabei annähernd der Breite des Honwerkzeugs und das jeweils verwendete Abrichtrad dem mittels des abzurichtenden Werkzeugs feinzubearbeitenden Zahnrads entspricht, können jedoch allenfalls geringe Korrekturen der Flankenlinie durch eine Änderung der Achseinstellwerte vorgenommen werden. So lassen sich Profilabweichungen und Abweichungen der Flankenlinien bei den konventionellen Maschinen nur dadurch ausgleichen, dass ein speziell für den Ausgleich dieser Fehler ausgelegtes Abrichtrad verwendet wird.

Um die Freiheitsgrade bei der Steuerung der Relativbewegung von abzurichtendem Werkzeug und Abrichtrad zu vergrößern und damit einhergehend eine größtmögliche Freiheit beim Ausgleich bzw. der Korrektur von Geometriefehlern des abzurichtenden Werkzeugs zu sichern, ist es beispielsweise aus der EP 0 665 076 B1 bekannt, der Relativbewegung in X- und Z-Richtung zusätzlich eine senkrecht zu diesen Bewegungen ausgerichtete Bewegung zu überlagern (Bewegung in Y-Richtung).

Die bei Maschinen der in der EP 0 665 076 B1 beschriebenen Art vorgesehene, in den drei Orthogonalachsrichtungen X, Y und Z erfolgende simultane Relativverschiebung des Werkrades gegenüber dem Werkzeug soll eine weitgehend freie Gestaltung der Form der Abrichtrad- und Werkzeugteilkörper und somit der Flankenbreitenkorrekturen (ballig, konisch, hohl, konischballig, hohl-ballig) und der momentanen Relativlage der Bearbeitungszonen sowohl auf den Flanken des Abrichtrads als auch auf den Flanken des abzurichtenden Werkzeugs ermöglichen. Allerdings muss dazu ein gegenüber konventionellen, nur mit einer Relativbeweglichkeit von Abrichtrad und abzurichtendem Werkzeug in X- und Z-Richtung ausgestatteten Vorrichtungen deutlich erhöhter apparativer und steuerungstechnischer Aufwand in Kauf genommen werden.

Auch muss trotz der Einführung einer zusätzlichen Y-Achse für jede Zahnform ein gesondertes Abrichtwerkzeug vorhanden sein. So können mit einem Abrichtrad, dessen mit dem abzurichtenden Werkzeug in Kontakt kommende Teilkörper zylindrisch sind, nur ballige Werkradflanken hergestellt werden, deren kinematisch wirksamer Teilkörper eine gleiche oder größere kinematische Balligkeit hat als der zylindrische Teilkörper des Werkzeugs. Um größere Balligkeiten erzeugen zu können, muss dagegen ein Abrichtrad verwendet werden, dessen Teilkörper selbst ballig ausgebildet ist.

Vor diesem Hintergrund lag der Erfindung die Aufgabe zu Grunde, ein Verfahren zu schaffen, mit denen es bei vermindertem apparativen Aufwand möglich ist, während des Abrichtens das am abzurichtenden Werkzeug zu erzeugende Profil und die zu erzeugende Flankenlinie mit weitestmöglicher Gestaltungsfreiheit zu variieren. Insbesondere sollte dabei auf einfache Weise mit den an konventionellen Abrichteinrichtungen vorhandenen Steuerungs- und Bewegungsmöglichkeiten eine Korrektur der Flankenlinie des abzurichtenden Werkzeugs möglich sein.

Diese Aufgabe ist erfindungsgemäß durch das in Anspruch 1 angegebene Verfahren gelöst worden. Vorteilhafte Ausgestaltungen dieses Verfahrens sind in den auf Anspruch 1 rückbezogenen Ansprüchen angegeben.

Die Erfindung basiert auf dem Gedanken, zum Abrichten eines Werkzeugs für die Feinbearbeitung von Zahnrädern mit unbestimmter Klinge ein gegenüber der Breite des abzurichtenden Werkzeugs sehr schmales Abrichtrad zu verwenden.

Ebenso können die jeweiligen Flanken der Zähne des abzurichtenden Werkzeugs unter voneinander abweichenden Vorgaben bearbeitet werden. So ist es beispielsweise möglich, die einander gegenüberliegenden Flanken zweier Zähne des abzurichtenden Werkzeugs nacheinander unterschiedlich auszuführen. Der besondere Vorteil besteht in dieser Hinsicht darin, dass die geringe Dicke des erfindungsgemäß eingesetzten Abrichtrades es erlaubt, die einzelnen Flanken der Zähne des abzurichtenden Werkzeugs unabhängig voneinander zu bearbeiten.

Ein besonderer Vorteil der erfindungsgemäßen Vorgehensweise besteht dabei darin, dass es durch die erfindungsgemäße Verwendung eines gegenüber dem abzurichtenden Werkzeug sehr schmalen Abrichtrades erzielte weitestgehende Freiheit der Beweglichkeit dieses Abrichtrades zwischen den Zähnen des abzurichtenden Werkzeugs möglich ist, Korrekturen der Flankenlinien des abzurichtenden Werkzeugs unabhängig von einer bestimmten, allein auf das jeweils zu bearbeitende Werkzeug bezogenen Formgebung des Abrichtrades vorzunehmen.

Eine Verstellmöglichkeit in der zweiten Ebene zum Achskreuzwinkel ist dazu jeweils nicht erforderlich. Vielmehr können bei erfindungsgemäßem Vorgehen durch

- eine insbesondere oszillierende Bewegung des erfindungsgemäß schmalen Abrichtrades in Richtung der Werkstückachse (Z-Richtung),

- eine Variation des Achsabstandes von abzurichtendem Werkzeug und Abrichtrad (X-Richtung) und / oder

- eine Verstellung entlang bzw. bezogen auf die Drehachsen (B- bzw. C-Achse) von abzurichtendem Werkzeug und / oder Abrichtrad und die damit einhergehende Veränderung der theoretischen Steigung oder des Schrägungswinkels bzw. die damit erzielten Schraubenbewegungen

erforderlichenfalls auch sich räumlich komplex darstellende Formabweichungen, wie Fehler der Balligkeit, der Konizität und/oder der Verschränkungen der Verzahnung des jeweils abzurichtenden Werkzeugs alleine durch eine in der jeweiligen Motorsteuerung hinterlegte Verstellung des erfindungsgemäß schmalen Abrichtrades korrigiert werden.

Die Vorteile der Verwendung eines erfindungsgemäß schmalen Abrichtwerkzeuges bestehen darin, dass durch die geringe Breite des Abrichtwerkzeugs geringere Fertigungskosten entstehen. Dies verringert die Herstellkosten. Darüber hinaus werden verbesserte Abrichter-Standzeiten durch bessere Ausnutzung der mit Diamanten besetzten Schneidflächen des Abrichtwerkzeugs erzielt. Durch den bei einem erfindungsgemäß schmalen Abrichtwerkzeug erzielten intensiven Kontakt zwischen Abrichtrad und abzurichtendem Werkzeug wird ein effektiver Späneabtransport und damit einhergehend eine besonders saubere Oberfläche an den jeweils bearbeiteten Zahnrädern erzielt. Die stirnseitigen Schnittkanten des Abrichtrades können dabei profiliert sein, um Korrekturen der Form des abzurichtenden Werkzeugs auf besonders einfache Weise über die bahngesteuerten Bewegungsachsen der jeweiligen Abrichtmaschine durchführen zu können.

Dementsprechend wird gemäß der Erfindung beim Abrichten eines für die Feinbearbeitung der Zähne eines Zahnrades bestimmten, eine mit dem zu bearbeitenden Zahnrad in Eingriff kommende Verzahnung aufweisenden Werkzeugs ein Abrichtrad eingesetzt, dessen in Richtung seiner Drehachse gemessene Breite seiner mit dem anzurichtenden Werkzeug in Eingriff kommenden Zähne erfindungsgemäß um so viel kleiner als die Breite des abzurichtenden Werkzeugs ist, dass das Abrichtrad zum Überstreichen der Breite des abzurichtenden Werkzeugs um eine Länge in Z-Richtung bewegt werden muss, die einem Vielfachen der Breite des Abrichtrades entspricht. Das derart schmale Abrichtrad wird mit den Verzahnungen des abzurichtenden Werkzeugs und des Abrichtrads in Eingriff gebracht. Das Abrichtrad und das abzurichtende Werkzeug werden im Abrichtbetrieb dann über jeweils einen eigenen Antrieb um jeweils eine Drehachse drehend angetrieben.

Gleichzeitig wird ihre Relativposition mittels geeigneter individuell steuerbarer Stellantriebe in Richtung (Z-Richtung) der Drehachse des Abrichtrades und/oder eine dazu quer ausgerichtete Richtung (X-Richtung) sowie erforderlichenfalls durch zusätzliche Verdrehung um die Drehachse (B-Achse) des zu bearbeitenden Werkzeugs und/oder um die Drehachse (C-Achse) des Abrichtrades mittels ebenfalls individuell steuerbarer Antriebe verstellt, um die gewünschte Flankenform (Balligkeit, Konizität) der Zähne des abzurichtenden Werkzeugs zu erzeugen. Die geringe Breite des erfindungsgemäßen Abrichtrades erlaubt es dabei, die Schmalseiten der Zähne des Abrichtrades unabhängig von der Gestalt und Ausrichtung der Zahnflanken des zu bearbeitenden Werkzeugs so zu gestalten, dass die jeweilige Kontaktfläche zwischen abzurichtendem Werkzeug und Abrichtrad auf ein Minimum reduziert ist.

Insbesondere ist in dem Fall, dass ein schrägverzahntes Werkzeug mit einem erfindungsgemäß schmalen Abrichtrad bearbeitet wird, an dem Abrichtrad nicht der Schrägungswinkel des vom abzurichtenden Werkzeug zu bearbeitenden Werkstücks abgebildet, sondern allenfalls nur angenähert. Die geringe Breite des Abrichtrades erlaubt es daher, die Größe von seinen mit dem abzurichtenden Werkzeug in Kontakt kommenden Flächen auch beim Abrichten von Werkzeugen mit schrägverzahnten oder in anderer Weise beliebig komplex geformten Verzahnungen auf ein Minimum zu reduzieren. Entsprechendes gilt, wenn mittels eines erfindungsgemäß schmalen Abrichtrades ein Werkzeug abgerichtet wird, das für die Bearbeitung eines geradverzahnten Werkstücks bestimmt ist.

Auf diese Weise kann das erfindungsgemäße Abrichtrad im Zuge des Abrichtvorgangs unabhängig von der Form der jeweils zu bearbeitenden Zähne bei in Eingriff befindlichem Abrichtrad und abzurichtendem Werkzeug in einer weitestgehend frei steuerbaren Bewegung entlang der Zahnflanken des abzurichtenden Werkzeugs bewegt werden.

Beim erfindungsgemäß erfolgenden Abrichten von schrägverzahnten oder in anderer Weise komplex geformt verzahnten Werkzeugen wird demzufolge der jeweilige Schrägungswinkel bzw. die jeweils abzubildende Zahnform nur durch die Bewegung des Abrichtrades bestimmt, die das Abrichtrad bei seinem Weg entlang der Zahnflanke des Zahns ausführt, mit dem es jeweils in Eingriff steht. Die erfindungsgemäße Vorgehensweise gestattet es auf diese Weise, mittels der an konventionellen Feinbearbeitungsmaschinen standardmäßig vorhandenen Verstellmöglichkeiten in X- und Z-Richtung sowie um die B- und C-Achse die am jeweils bearbeiteten Zahn zu erzeugende Form allein durch Maschinensteuerung vorzugeben. Die beim Stand der Technik aufgrund der notwendigerweise korrespondierenden Form von Abrichtrad und zu bearbeitendem Werkzeug sich ergebenden Einschränkungen bei der Formgebung des abzurichtenden Werkzeugs bestehen damit bei erfindungsgemäßer Vorgehensweise nicht mehr.

Stattdessen ist es bei erfindungsgemäßer Vorgehensweise möglich, mit einem Abrichtrad unterschiedlich geformte Werkzeuge abzurichten. Insbesondere können mit einem einzigen erfindungsgemäß schmalen Abrichtrad Werkzeuge abgerichtet werden, die sich hinsichtlich ihrer Formgebung, insbesondere hinsichtlich ihres Normalmoduls und ihrer Normalprofilform unterscheiden. Die im Stand der Technik noch bestehende Notwendigkeit, für jedes abzurichtende Werkzeug ein speziell an das jeweilige Werkzeug angepasstes Abrichtrad einzusetzen, ist somit durch die Erfindung aufgehoben.

Ebenso lassen sich durch die erfindungsgemäße Verwendung eines Abrichtrades mit weitgehend reduzierter Breite auf einfache Weise die Zähne des abzurichtenden Werkzeugs so formen, dass bei der anschließenden Feinbearbeitung eines Zahnrads mit einem solcherart abgerichteten Werkzeug Profilkorrekturen am bearbeiteten Zahnrad erzeugt werden.

Die Form des erfindungsgemäß schmalen Abrichtrades muss dazu weder in einer speziellen Weise auf das zu erzeugende Profil abgestimmt sein noch müssen aufwändige zusätzliche Steuerungsmöglichkeiten in der jeweiligen Abrichtvorrichtung vorhanden sein.

Stattdessen kann bei Verwendung eines erfindungsgemäß schmalen Abrichtrades ein abweichender Schrägungswinkel in das abzurichtende Werkzeug eingebracht werden, indem das schmale Abrichtrad während des Abrichtvorgangs mit einer geänderten Steigung bezogen auf das abzurichtende Werkzeug bewegt wird. Auf diese Weise lässt sich der Modul des abzurichtenden Werkzeugs verändern.

Wird nun bei der Feinbearbeitung des Werkstücks mit dem in dieser Weise abgerichteten Werkzeug der veränderte Schrägungswinkel des Werkzeugs durch Korrektur des Achskreuzwinkels ausgeglichen, so wird am Werkstück ein veränderter Normalmodul real abgebildet. Wird das so bearbeitete Werkstück nun mit dem ursprünglich geforderten Normalmodul gemessen, ergibt sich ein abweichender Profilwinkel.

Das erfindungsgemäß eingesetzte Abrichtrad ist möglichst schmal ausgebildet. Optimaler Weise ist seine Breite so reduziert, dass seine den Zahnflanken des abzurichtenden Werkzeugs zugeordneten Schmalseiten nach Art einer Messerschneide ausgebildet sind oder, soweit dies aus materialtechnischen Gründen nicht möglich ist, zumindest so schmal sind, dass jeweils nur eine minimale Überdeckungsfläche zwischen den Schmalseiten des Abrichtrades und den Flankenflächen des zu bearbeitenden Werkzeugs gegeben ist. Dementsprechend sieht die Erfindung vor, dass die Breite der mit dem abzurichtenden Werkzeug in Eingriff kommenden Zähne des Abrichtrades höchstens einem Fünftel, bevorzugt höchstens einem Achtel, der Breite des abzurichtenden Werkzeugs entspricht.

Um einerseits das in Z-Richtung erfolgende Einfahren des erfindungsgemäß schmalen Abrichtrades in das abzurichtende Werkzeug und andererseits eine größtmögliche Gestaltungsfreiheit bei der Abrichtbearbeitung der Zähne des Werkzeugs zu ermöglichen, ist bei einer praxisgerechten Ausgestaltung der Erfindung das Modul des Abrichtrades gleich dem Stirnmodul des von dem abzurichtenden Werkzeug feinzubearbeitenden Zahnrads.

Die durch das erfindungsgemäße Verfahren eröffneten Möglichkeiten der Beeinflussung der Formen der Zähne des abzurichtenden Werkzeugs lassen sich insbesondere dann besonders effektiv nutzen, wenn das abzurichtende Werkzeug ringförmig ausgebildet und innenverzahnt für die Feinbearbeitung von außenverzahnten Zahnrädern bestimmt ist, wobei zum Abrichten eines solchen Werkzeugs ein entsprechend außenverzahntes Abrichtrad eingesetzt wird. Die durch die Verwendung eines erfindungsgemäß schmalen Abrichtrades eröffneten Möglichkeiten gestatten insbesondere bei der Bearbeitung von Werkzeugen für die Feinbearbeitung von außenverzahnten Zahnrädern eine größtmögliche Bandbreite der Beeinflussung der jeweils zu erzeugenden Zahnform.

In der Praxis können schmale Abrichträder der erfindungsgemäß verwendeten Art in an sich bekannter Weise aus einem zahnradförmigen Träger bestehen, dessen mit dem abzurichtenden Werkzeug in Kontakt kommende Flächen mit Diamantkörnern oder -splittern besetzt sind. Die in Z-Richtung gemessene Breite des erfindungsgemäßen Abrichtrades ist dabei idealer Weise so gering, dass das Abrichtrad mit seinen Schmalseiten nach Art einer Messerschneide entlang der Zahnflanken des abzurichtenden Werkzeugs bewegt werden kann.

Dementsprechend kann das erfindungsgemäß schmale Abrichtrad beispielsweise eine dem Querschnitt einer Linse entsprechende linsenförmige Querschnittsform besitzen.

Um jedoch erforderlichenfalls trotz der beschränkten Breite bei einem solcherart beschaffenen erfindungsgemäß schmalen Abrichtrad einen ausreichend festen Halt der Diamantpartikel zu sichern, kann die Grundform des Querschnitts des erfindungsgemäß schmalen Abrichtrads im Wesentlichen viereckig, insbesondere rechtwinklig, ausgebildet sein. Auf diese Weise ist auch im Bereich der Schmalseiten des erfindungsgemäßen Abrichtrades eine ausreichende Auflagefläche für den Diamantbesatz geschaffen.

Um trotz der im Hinblick auf den festen Halt des Diamantbesatzes gegebenenfalls benötigten viereckigen, insbesondere rechtwinkligen Ausbildung des Querschnitts eines erfindungsgemäß schmalen Abrichtrades eine optimale Nutzung der erfindungsgemäß eröffneten Möglichkeiten der Formgebung der Zahnflanken des abzurichtenden Werkzeugs zu gewährleisten, sollte die größte Diagonale durch den Querschnitt des Abrichtrades höchstens gleich dem jeweiligen Normalbestand der einander zugeordneten Zahnflanken zweier benachbart angeordneter Zähne des abzurichtenden Werkzeugs entsprechen. Auf diese Weise stellt sich ein Kontakt zwischen dem Abrichtrad und der jeweils zu bearbeitenden Flanke des abzurichtenden Werkzeugs jeweils nur in einem Eckbereich des Abrichtrades ein und die Form des erfindungsgemäß schmalen Abrichtrades kann unabhängig von der Ausrichtung und Form der zu bearbeitenden Zahnflanken mit dem Ziel einer größtmöglichen Beweglichkeit relativ zu den zu bearbeitenden Zahnflanken ausgelegt werden.

Um die im Bereich des Kontaktes auftretenden Belastungen des Abrichtrades zu reduzieren, kann mindestens die während des Abrichtens mit der jeweiligen Zahnflanke des abzurichtenden Werkzeugs in Kontakt kommende Kante der Zähne des Abrichtwerkzeugs angephast oder abgerundet sein. Auch ist es möglich, an den jeweiligen Kantenbereich einen über eine einfache Abrundung hinausgehend gebogen ausgeführten Abschnitt anzuformen, um erforderlichenfalls die Kontaktfläche um ein bestimmtes Maß zu vergrößern.

Alternativ zu einer eckigen Grundform lassen sich auch solche erfindungsgemäß schmalen Abrichträder einsetzen, bei denen jeweils die mindestens eine mit den Flanken des abzurichtenden Werkzeugs in Kontakt kommende Schmalseite der Zähne des Abrichtrades im Querschnitt bogenförmig ausgebildet ist. Bei einer solchen bogenförmig ausgewölbten Form der Schmalseite ist auf besonders einfache Weise sichergestellt, dass es jeweils nur zu einem eng begrenzten, im Wesentlichen auf eine Punktfläche reduzierten Kontakt zwischen abzurichtendem Werkzeug und Abrichtrad kommt.

Mit der Erfindung steht somit ein Verfahren zur Verfügung, das es auf einfache Weise erlaubt, nicht nur die Flankenlinien des abzurichtenden Werkzeugs zu korrigieren, sondern das abzurichtende Werkzeug auch so zu formen, dass Profilkorrekturen am mit dem Werkzeug feinzubearbeitenden Zahnrad erzielt werden können. So kann das in erfindungsgemäßer Weise abgerichtete Werkzeug bei gleichem Modul von Werkzeug und von ihm feinzubearbeitenden, insbesondere zu honendem Zahnrad, an dem Zahnrad den Eingriffswinkel verändern. Umgekehrt ist es auch möglich, das Werkzeug mit Hilfe eines erfindungsgemäß schmalen Abrichtrades mit den auf einer konventionellen Maschine vorhandenen Verstellmöglichkeiten so zu formen, dass es am von ihm feinbearbeiteten Zahnrad bei gleichbleibendem Eingriffswinkel eine Änderung seines Moduls bewirkt.

Die Vorteile der erfindungsgemäßen Vorgehensweise bestehen folglich darin, dass mit einem erfindungsgemäß schmal ausgebildeten Abrichtwerkzeug verschiedene Module oder verschiedene Eingriffswinkel- / Profilwinkelkorrekturen erzeugt werden können. Darüber hinaus können auch Profilwinkelabweichungen am zu bearbeitenden Zahnrad über eine entsprechende Abrichtung des zum Feinbearbeiten dieses Zahnrades bestimmten Werkzeugs korrigiert werden. Schließlich kann bei insbesondere im zur Erprobung neuer Zahnradgeometrien durchgeführten Testbetrieb durch eine einfache Verstellung der Motorsteuerung während des Abrichtens des Werkzeugs der Modul des von diesem Werkzeug anschließend feinbearbeiteten Zahnrads beeinflusst werden, ohne dass dazu jeweils ein neues Abrichtrad oder Werkzeug benötigt wird.

Mit der Erfindung steht somit ein Verfahren zur Verfügung, das es erlaubt, Flankenlinienkorrekturen am abzurichtenden Werkzeug mit einer einfach gestalteten Maschine durchzuführen. Bei den aus dem Stand der Technik bekannten Vorgehensweisen ist dazu jeweils eine zusätzliche axiale Bewegung längs einer dazu vorgesehenen zusätzlichen Werkzeugachse erforderlich. Eine solche zusätzliche Achse wird bei der Erzeugung von Flankenlinienkorrekturen mittels des erfindungsgemäßen Verfahrens nicht benötigt.

Die Erfindung erlaubt es des Weiteren, im großen Umfang Flankenlinienkorrekturen durchzuführen, ohne dass dazu ein speziell geformtes Werkzeug oder eine besondere Beweglichkeit der zur Durchführung des Verfahrens eingesetzten Maschine benötigt wird. Während beim Stand der Technik die Verzahnungsform (d.h. das jeweilige Flankenlinienprofil) fest in den Abrichter eingearbeitet sein muss, ermöglicht es die Schmalheit des erfindungsgemäß eingesetzten Abrichtrades und die Weite der von ihm bei der Abrichtbearbeitung zurückgelegten Strecke, die erforderlichen Korrekturen durch eine entsprechende Bewegung bzw. Ausrichtung des Abrichtrades vorzunehmen. Auf diese Weise können die Korrekturen über ein wesentlich breiteres Spektrum durchgeführt werden als beim Stand der Technik. Dort sind jeweils nur kleine Korrekturen der Flankenlinie unter Zuhilfenahme der voranstehend erwähnten zusätzlichen Maschinenachse möglich, die für das erfindungsgemäße Verfahren nicht benötigt werden.

Anders als bei den aus dem Stand der Technik bekannten Maschinen, bei denen die Breite der Abrichter regelmäßig mindestens der Werkstückbreite entspricht oder allenfalls nur geringfügig schmaler ist, ist das gemäß der Erfindung eingesetzte Abrichtrad jeweils so deutlich schmaler als die Breite des zu bearbeitenden Werkstücks, dass das Abrichtrad bei der Abrichtbearbeitung über eine Strecke entlang des Werkstücks (= abzurichtendes Werkzeug) bewegt werden muss, die jeweils mehr als dem Doppelten der Breite des Abrichtrades entspricht. Anders als beim Stand der Technik, bei dem ein gegenüber der Breite des zu bearbeitenden Werkstücks allenfalls nur geringfügig schmaleres Abrichtrad eingesetzt ist, erlaubt der vergleichbar lange Weg, der von einem erfindungsgemäßen Abrichtrad aufgrund seiner Schmalheit zurückgelegt werden muss, somit eine weitgehend freie Beeinflussung der Flankenlinienform des abzurichtenden Werkstücks. Beim Stand der Technik, bei dem gegenüber dem Werkstück geringfügig schmalere Abrichträder eingesetzt werden, steht diese Möglichkeit nicht zur Verfügung, da dort die Relativbewegung zwischen dem Werkstück und dem Abrichtrad aufgrund des Umstandes begrenzt ist. Aufgrund des Umstandes, dass beim Stand der Technik die Verzahnungsform einschließlich des jeweilige Flankenlinienprofil fest in den Abrichter eingearbeitet sind, würde bei einem zu großen Hub der Relativbewegung das Flankenlinienprofil im bei dieser Bewegung überstrichenen Bereich eine gerade Profillinienform längs der Flankenlinie ergeben.

Grundlage des erfindungsgemäßen Verfahrens ist demgegenüber, dass ein erfindungsgemäß schmales Abrichtrad durch die gesamte Verzahnung des abzurichtenden Werkzeugs hindurch fährt, wobei auf diesem Weg über die standardmäßig vorhandenen Bewegungsachsen der jeweils eingesetzten Maschine an beliebiger Stelle die Flankenlinie korrigiert werden kann. Dies erlaubt es beispielsweise, am Anfang, in der Mitte oder am Ende der Flankenlinie jeweils gezielt Korrekturen vorzunehmen, ohne dass dazu ein speziell geformtes Abrichtwerkzeug benötigt wird. Vielmehr können die Korrekturen bei erfindungsgemäßer Vorgehensweise ohne den Abrichter zu ändern oder zu wechseln innerhalb der Maschine auf elektronischem Wege an die jeweiligen Vorgaben angepasst werden.

Schließlich ist es bei Verwendung eines erfindungsgemäß schmalen Abrichtrades möglich, eine so genannte "Einflankenabrichtung" vorzunehmen, bei der mit demselben Abrichtwerkzeug beispielsweise die eine Flanke des jeweiligen Zahns des abzurichtenden Werkzeugs (z.B. die linke Honringflanke) mit einem anderen Flankenlinienprofil versehen wird als die andere (z.B. die rechte Honringflanke). Selbstverständlich können jedoch auch beide Zahnflanken des abzurichtenden Werkzeugs gleichzeitig abgerichtet werden.

Nachfolgend wird die Erfindung anhand von Ausführungsbeispielen näher erläutert. Es zeigen jeweils schematisch:

Fig. 1 eine Vorrichtung zum Abrichten eines Werkzeugs zum Honbearbeiten eines außenverzahnten Zahnrads in einem Längsschnitt;

Fig. 2 ein in der Vorrichtung gemäß Fig. 1 verwendetes Abrichtrad;

Fig. 3a-3e jeweils eine dem Ausschnitt A von Fig. 2 entsprechende vergrößerte Darstellung von verschiedenen Ausgestaltungen des in Fig. 2 dargestellten Abrichtrades;

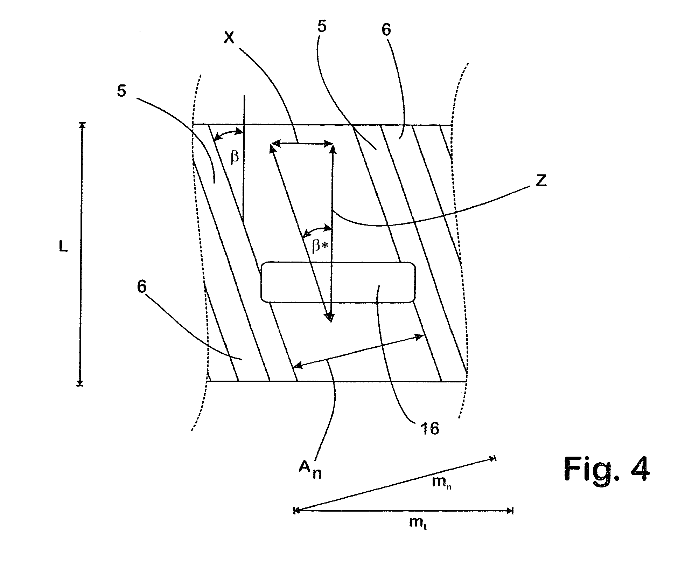

Fig. 4 einen Ausschnitt des mit dem Werkzeug in Eingriff stehenden Abrichtrades in teilgeschnittener Ansicht von oben;

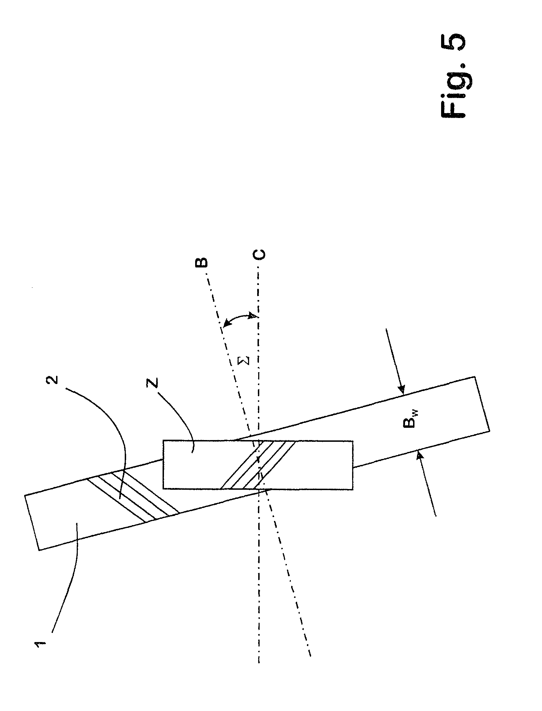

Fig. 5 die Vorrichtung gemäß Fig. 1 bei der Feinbearbeitung des außenverzahnten Zahnrads in einem Längsschnitt.

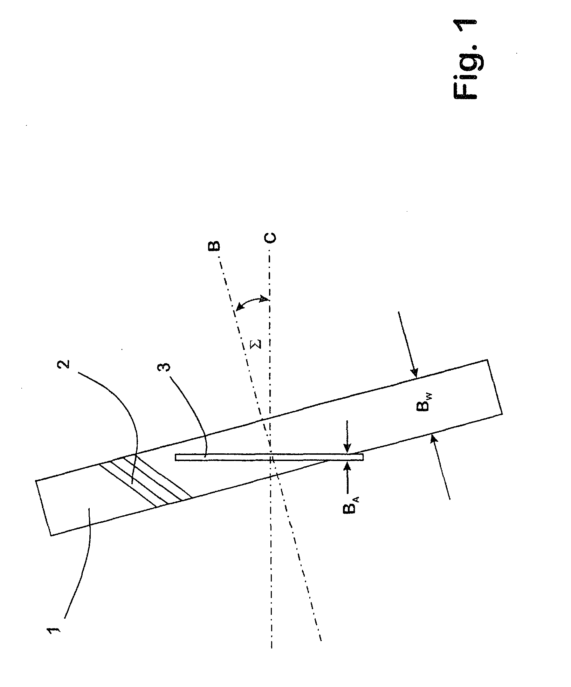

Das in Fig. 1 gezeigte Werkzeug 1 ist zum Honen der Verzahnung eines außenschrägverzahnten, hier nicht dargestellten Zahnrads Z bestimmt. Zu diesem Zweck ist es ringförmig ausgebildet und weist eine Innenschrägverzahnung 2 auf.

Zum Abrichten des Werkzeugs 1 ist ein Abrichtrad 3 vorgesehen, das in an sich bekannter Weise aus einem aus Metall gefertigten Träger 4 besteht, dessen den Zahnflanken 5 der Zähne 6 des zu abzurichtenden Werkzeugs 1 zugeordnete Schmalseiten 7 mit Diamanten besetzt sind.

Die Breite $B_A$ des Abrichtrades 3 beträgt weniger als ein Achtel der Breite $B_w$ des abzurichtenden Werkzeugs 1. Dementsprechend beträgt die Länge L, um die das Abrichtrad 3 in Richtung seiner Drehachse C (Z-Richtung) bewegt werden muss, um die Breite $B_w$ des Werkzeugs 1 zu überstreichen, mehr als das Achtfache der Breite $B_A$ des Abrichtrades 3.

Während des Abrichtbetriebes steht die Drehachse C des Abrichtrades 3 unter einem Achskreuzwinkel $\Sigma$ zur Drehachse B des abzurichtenden Werkzeugs 1. Weder die räumliche Zuordnung noch die Breitenverhältnisse sind in den Figuren maßstäblich richtig dargestellt

Zur Verstellung des Abrichtrades in Z-Richtung und der dazu quer ausgerichteten X-Richtung relativ zum abzurichtenden Werkzeug 1 sind hier nicht gezeigte individuell steuerbare Stelleinrichtungen vorgesehen, wie sie an konventionellen Maschinen dieser Art regelmäßig vorhanden sind. Zusätzlich kann die Steigung der um die B- und/oder C-Achse vom abzurichtenden Werkzeug 1 bzw. vom Abrichtrad 3 vollführten Drehungen verändert werden. Dies kann mittels der voneinander unabhängigen Antriebe erfolgen, die zum Drehen von Abrichtrad 3 und abzurichtendem Werkzeug 1 um die ihnen jeweils zugeordnete Drehachse C bzw. B vorgesehen sind.

Die für die Bewegung in X- und Z-Richtung zuständigen Stelleinrichtungen sowie die Antriebe für die Drehungen um die B- und C-Achsen werden über eine hier ebenfalls nicht gezeigte frei programmierbare Maschinensteuerung gesteuert.

Die Flanken 5 der Zähne 6 des abzurichtenden Werkzeugs 1 sind unter einem Schrägungswinkel β schräg zur Drehachse B des Werkzeugs 1 ausgerichtet.

Der Modul der Verzahnung des Abrichtrades 3 entspricht idealer Weise dem Stirnmodul $m_t$ des abzurichtenden Werkzeugs 1. In der Praxis wird das Modul des Abrichtrades 3 im Rahmen der Fertigungsmöglichkeiten an dieses ideale Modul angenähert.

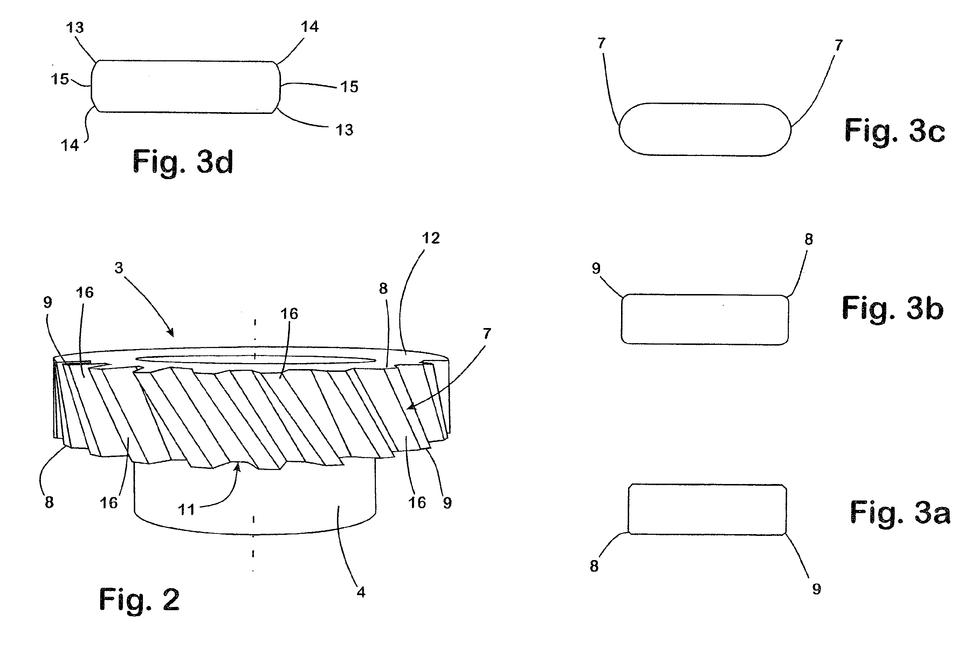

Die Kanten 8,9 im Bereich des Übergangs zwischen den Schmalseiten 7 und den Stirnseiten 11,12 des Abrichtrades 3 können, wie in Fig. 2 gezeigt, scharfkantig ausgebildet sein. Alternativ können sie jedoch auch angephast (Fig. 3a) oder abgerundet (Fig. 3b) ausgebildet sein, um die dort im Abrichtbetrieb auftretenden Belastungen zu mindern. Möglich ist es auch, die Schmalseiten 7, wie in Fig. 3c gezeigt, nach außen gleichmäßig gewölbt auszuführen oder, wie in Fig. 3d dargestellt, im Bereich der Kanten 8,9 jeweils einen gleichmäßig gewölbten Abschnitt 13,14 auszubilden, der mit definiertem Übergang in einen mittig angeordneten ebenen Flächenabschnitt 15 der Schmalseiten übergeht.

Die jeweilige größte Diagonale D der im Querschnitt in ihrer Grundform rechtwinklig ausgebildeten schmalen Zähne 16 des Abrichtrades 3 entspricht im Wesentlichen dem jeweiligen Normalabstand An der Flanken 5 der Zähne 6 des abzurichtenden Werkzeugs 1. Auf diese Weise berührt der jeweils in Eingriff befindliche Zahn 16 des Abrichtrades 3 die einander zugeordneten Flanken 5 der benachbart angeordneten Zähne 6 des abzurichtenden Werkzeugs 1 jeweils nur punktförmig mit seinen diagonal gegenüberliegenden Kanten 8,9.

Um ein abweichendes Normalmodul $m_n$ in dem Werkzeug 1 auszubilden, wird das Abrichtrad 3 durch entsprechende Verstellung in Z- und X-Richtung sowie durch Veränderung der Steigung der um die B- oder C-Achse vollführten Zusatzdrehung unter einem vom Schrägungswinkel β abweichenden Winkel β* oszillierend entlang der Zahnflanken 5 der Zähne 6 des Werkzeugs 1 geführt. Am Werkzeug 1 stellt sich dadurch das Normalmodul $m_n = m_t \times \cos(\beta^*)$ ein. Auf diese Weise kann am vom Werkzeug 1 zu bearbeitenden Zahnrad Z gezielt ein abweichender Profilwinkel α erzeugt werden.

Es gilt:

$$\tan(\alpha) = \tan(\alpha_t) * \cos(\beta)$$

wobei mit $\alpha_t$ der Profilwinkel des Abrichters 3 bezeichnet ist.

Durch Variation des Schrägungswinkels β, unter dem Werkzeug 1 abgerichtet wird, kann folglich eine Korrektur des Profilwinkels α des mit dem entsprechend abgerichteten Werkzeug bearbeiteten Zahnrads Z erreicht werden:

Zu bearbeitendes Zahnrad Z:

$m_n = 2$

$\beta = 30°$

$\alpha = 20°$

Schmaler Abrichter 3:

$m_t = m_n/\cos(\beta) = 2,399$

Wird das Werkzeug 1 mit β = 30 ° abgerichtet (abzüglich oder zuzüglich Achskreuzwinkel Σ), entsteht bei der Honbearbeitung ein vom Werkzeug 1 bearbeitetes Zahnrad Z mit $m_n = 2$, β = 30° und α = 20°. Wird dagegen das Werkzeug 1 mit β = 30,2 ° abgerichtet (abzüglich oder zuzüglich Achskreuzwinkel Σ), entsteht bei der Honbearbeitung ein vom Werkzeug 1 bearbeitetes Zahnrad Z mit einem Profilwinkel α von 20,0367°, während dann, wenn mit β = 29,8° abgerichtet wird (abzüglich oder zuzüglich Achskreuzwinkel Σ), bei der Honbearbeitung ein vom Werkzeug 1 bearbeitetes Zahnrad Z mit α = 19,9625° geformt wird. Der jeweils abweichende Schrägungswinkel β des Werkzeugs 1 kann über eine Korrektur des Achskreuzwinkels bei der Bearbeitung des Zahnrads Z ausgeglichen werden, um am Zahnrad Z den gewünschten Schrägungswinkel zu erhalten.

**BEZUGSZEICHEN**

| 1 | ringförmiges Werkzeug zum Honen der Verzahnung eines außenschrägverzahnten Zahnrads |
|---|---|
| 2 | Innenschrägverzahnung des Werkzeugs 1 |
| 3 | Abrichtrad |
| 4 | Träger des Abrichtrades 3 |
| 5 | Zahnflanken der Zähne 6 |
| 6 | Zähne des abzurichtenden Werkzeugs 1 |
| 7 | Schmalseiten des Abrichtrades 3 |
| 8,9 | Kanten im Bereich des Übergangs zwischen den Schmalseiten 7 und den Stirnseiten 11,12 des Abrichtrades 3 |
| 11,12 | Stirnseiten des Abrichtrades 3 |
| 13,14 | gewölbten Abschnitt |
| 15 | Flächenabschnitt |
| 16 | Zähne |
| An | Normalabstand der Flanken 5 |
| β | Schrägungswinkel |
| B | Drehachse des Werkzeugs 1 |
| β* | Winkel |
| $B_A$ | Breite des Abrichtrades 3 |
| $B_w$ | Breite des abzurichtenden Werkzeugs 1 |

C      Drehachse des Abrichtrades 3

D      Diagonale

L      Länge, um die das Abrichtrad 3 in Richtung seiner Drehachse C (Z-Richtung) bewegt werden muss, um die Breite $B_W$ des Werkzeugs 1 zu überstreichen

$m_n$      Normalmodul

$m_t$      Stirnmodul des abzurichtenden Werkzeugs 1

Σ      Achskreuzwinkel

**Patentansprüche**

1. Verfahren zum Korrigieren der Flankenlinie der Zähne eines zum Feinbearbeiten der Zähne eines Zahnrades bestimmten Werkzeugs, das eine mit dem zu bearbeitenden Zahnrad in Eingriff kommende Verzahnung (6) aufweist,

   - mittels eines Abrichtrades (3), das eine Verzahnung aufweist, bei der die Breite ($B_A$) der mit dem abzurichtenden Werkzeug (1) in Eingriff kommenden Zähne (16) höchstens einem Fünftel der Breite ($B_W$) des abzurichtenden Werkzeugs (1) entspricht, so dass das Abrichtrad (3) zum Überstreichen der Breite ($B_W$) des abzurichtenden Werkzeugs (1) um eine Länge (L) in Z-Richtung bewegt werden muss, die einem Vielfachen der Breite ($B_A$) des Abrichtrades (3) entspricht,
   - wobei das derart schmale Abrichtrad (3) in einer insbesondere oszillierenden Bewegung in Richtung der Werkstückachse (Z-Richtung) geführt wird,
   - wobei der Achsabstand von abzurichtendem Werkzeug (1) und schmalen Abrichtrad (3) (X-Richtung) variiert wird und / oder
   - wobei das abzurichtende Werkzeug (1) und / oder das schmale Abrichtrad (3) entlang und bezogen auf ihre jeweilige Drehachsen (B- bzw. C-Achse) verstellt werden.

2. Verfahren nach Anspruch 1, **dadurch gekennzeichnet, dass** die Breite ($B_A$) der mit dem anzurichtenden Werkzeug (1) in Eingriff kommenden Zähne (16) des Abrichtrads (3) höchstens einem Achtel der Breite des abzurichtenden Werkzeugs entspricht.

3. Verfahren nach einem der voranstehenden Ansprüche, **dadurch gekennzeichnet, dass** das abzurichtende Werkzeug (1) eine Schrägverzahnung aufweist.

4. Verfahren nach einem der voranstehenden Ansprüche, **dadurch gekennzeichnet, dass** das abzurichtende Werkzeug (1) ringförmig ausgebildet ist und eine Innenverzahnung aufweist, während das Abrichtrad (3) außenverzahnt ist.

5. Verfahren nach einem der voranstehenden Ansprüche, **dadurch gekennzeichnet, dass** die Grundform des Querschnitts der Zähne (16) des Abrichtrads im Wesentlichen viereckig ist.

6. Verfahren nach Anspruch 5, **dadurch gekennzeichnet, dass** der Querschnitt der Zähne (16) des Abrichtrades (3) eine im Wesentlichen rechteckige Grundform aufweist.

7. Verfahren nach einem der voranstehenden Ansprüche, **dadurch gekennzeichnet, dass** mindestens die während des Abrichtens mit der jeweiligen Zahnflanke (5) des abzurichtenden Werkzeugs (1) in Kontakt kommende Kante (8,9) der Zähne des Abrichtrades (3) angepasst ist.

8. Verfahren nach einem der Ansprüche 1 bis 6, **dadurch gekennzeichnet, dass** mindestens die während des Abrichtens mit der jeweiligen Zahnflanke (5) des abzurichtenden Werkzeugs (1) in Kontakt kommende Kante (8,9) der Zähne (16) des Abrichtrades (3) abgerundet ist.

9. Verfahren nach einem der Ansprüche 1 bis 6, **dadurch gekennzeichnet, dass** jeweils mindestens eine der Schmalseiten der Zähne (16) des Abrichtrades (3) im Querschnitt bogenförmig ausgebildet ist.

10. Verfahren nach einem der voranstehenden Ansprüche, **dadurch gekennzeichnet, dass** das schmale Abrichtrad (3) während des Abrichtvorgangs mit einer geänderten Steigung bezogen auf das abzurichtende Werkzeug (1) bewegt wird.

11. Verfahren nach einem der voranstehenden Ansprüche, **dadurch gekennzeichnet, dass** die einander gegenüberliegenden Flanken zweier Zähne des abzurichtenden Werkzeugs (1) nacheinander unterschiedlich ausgeführt werden.

**Claims**

1. Method for correcting the trace of the teeth of a tool intended for finishing the teeth of a gearwheel and having teeth (6) which engage with the gearwheel to be machined,

   - by means of a dressing wheel (3) which has teeth, wherein the width ($B_A$) of the teeth (16), engaging with the tool (1) to be dressed, corresponds at most to a fifth of the width ($B_W$) of the tool (1) to be dressed, so that in order to sweep over the width ($B_W$) of the tool (1) to be dressed, the dressing wheel (3) has to be moved by a length (L) in the Z direction which corresponds to a multiple of the width ($B_A$) of the dressing wheel (3),

- wherein the slim dressing wheel (3) of this type is guided in the direction of the workpiece axis (Z direction) in a particularly oscillating movement,

- wherein the axial distance of the tool (1) to be dressed and the slim dressing wheel (3) is varied (X direction), and/or

- wherein the tool (1) to be dressed and/or the slim dressing wheel (3) are adjusted along and based on their respective axes of rotation (B and C axis).

2. Method according to claim 1, **characterised in that** the width ($B_A$) of the teeth (16), engaging with the tool (1) to be dressed, of the dressing wheel (3) corresponds at most to an eighth of the width of the tool to be dressed.

3. Method according to either one of the preceding claims, **characterised in that** the tool (1) to be dressed has a helical gearing.

4. Method according to any one of the preceding claims, **characterised in that** the tool (1) to be dressed is configured annularly and has an internal gearing, whereas the dressing wheel (3) has an external gearing.

5. Method according to any one of the preceding claims, **characterised in that** the basic shape of the cross section of the teeth (16) of the dressing wheel is substantially square.

6. Method according to claim 5, **characterised in that** the cross section of the teeth (16) of the dressing wheel (3) has a substantially rectangular basic shape.

7. Method according to any one of the preceding claims, **characterised in that** at least the edge (8, 9) of the teeth (16) of the dressing wheel (3), which edge (8, 9) comes into contact with the respective tooth flank (5) of the tool (1) to be dressed during the dressing procedure, is adapted.

8. Method according to any one of claims 1 to 6, **characterised in that** at least the edge (8, 9) of the teeth (16) of the dressing wheel (3), which edge (8, 9) comes into contact with the respective tooth flank (5) of the tool (1) to be dressed during the dressing procedure, is rounded.

9. Method according to any one of claims 1 to 6, **characterised in that** at least one of the narrow sides of the teeth (16) of the dressing wheel (3) is respectively configured to be arched in cross section.

10. Method according to any one of the preceding claims, **characterised in that** during the dressing procedure, the slim dressing wheel (3) is moved with an altered incline based on the tool (1) to be dressed.

11. Method according to any one of the preceding claims, **characterised in that** the mutually opposite flanks of two teeth of the tool (1) to be dressed are successively configured in a different manner.

**Revendications**

1. Procédé de dressage de la ligne de flanc d'un outil spécifique au traitement précis des dents d'une roue dentée, lequel outil est doté d'une denture (6), qui entre en prise avec la roue dentée à traiter,

- au moyen d'une roue de dressage (3), qui est dotée d'une denture, dans laquelle la largeur ($B_A$) des dents (16) entrant en prise avec l'outil à dresser (1), correspond au maximum à un cinquième de la largeur ($B_W$) de l'outil à dresser (1), de sorte que, pour balayer la largeur ($B_W$) de l'outil à dresser (1), la roue de dressage (3) doit être déplacée, dans la direction (Z), d'une longueur (L) qui correspond à un multiple de la largeur ($B_A$) de la roue de dressage (3),

- sachant que la roue de dressage (3), de cette minceur, est guidée, en particulier en mouvement oscillant, dans la direction de l'axe de l'outil (direction Z),

- sachant que l'entraxe de l'outil à dresser (1) et de la mince roue de dressage (3) (direction X) varie et / ou

- sachant que l'outil à dresser (1) et / ou la mince roue de dressage (3) sont déplacés le long de et par rapport à leur axe respectif (axe B respectivement axe (C).

2. Procédé selon la revendication 1, **caractérisé en ce que** la largeur ($B_A$) des dents (16) de la roue de dressage (3), qui attaquent l'outil à dresser (1), correspond au maximum à un huitième de la largeur de l'outil à dresser.

3. Procédé selon l'une des revendications précédentes **caractérisé en ce que** l'outil à dresser (1) est doté d'une denture oblique.

4. Procédé selon l'une des revendications précédentes, **caractérisé en ce que** l'outil à dresser (1) est de forme annulaire et est doté d'une denture intérieure, tandis que la roue de dressage (3) est dotée d'une denture extérieure.

5. Procédé selon l'une des revendications précédentes,
**caractérisé en ce que** la forme de base de la section transversale des dents (16) de la roue de dressage est sensiblement quadrangulaire.

6. Procédé selon la revendication 5,
**caractérisé en ce que** que la section transversale des dents (16) de la roue de dressage (3) présente une forme de base sensiblement rectangulaire.

7. Procédé selon l'une des revendications précédentes **caractérisé en ce qu'** au moins le bord (8, 9) des dents (16) de la roue de dressage (3) qui, pendant le dressage, entre en contact avec le flanc de dent (5) respectif de l'outil à dresser (1), est chanfreiné.

8. Procédé selon l'une des revendications 1 à 6,
**caractérisé en ce qu'**au moins le bord (8, 9) des dents (16) de la roue de dressage (3) qui, pendant le dressage, entre en contact avec le flanc de dent (5) respectif de l'outil à dresser (1), est arrondi.

9. Procédé selon l'une des revendications 1 à 6,
**caractérisé en ce qu'**au moins l'un des côtés étroits de chacune des dents (16) de la roue de dressage (3) est doté d'une section transversale en forme d'arc.

10. Procédé selon l'une des revendications précédentes,
**caractérisé en ce que**, pendant le processus de dressage, la roue de dressage (3) est mue en pente par rapport à l'outil à dresser (1).

11. Procédé selon l'une des revendications précédentes,
**caractérisé en ce que** les flancs d'une paire de dents de l'outil à dresser (1), opposés l'un à l'autre, sont exécutés différemment, l'un après l'autre.

Fig. 1

**Fig. 3d**

**Fig. 3c**

**Fig. 3b**

**Fig. 2**

**Fig. 3a**

EP 2 036 673 B1

Fig. 4

**Fig. 5**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 9057624 A
- EP 0665076 B1